Europäisches Patentamt

European Patent Office

Office européen des brevets

(11) Veröffentlichungsnummer: **0 458 049 A2**

# (12) EUROPÄISCHE PATENTANMELDUNG

(21) Anmeldenummer: 91105693.5

(22) Anmeldetag: 10.04.91

(51) Int. Cl.5: **F16L 9/16, F01N 7/18, F01N 7/14, B65D 3/22**

(30) Priorität: 26.09.90 DE 4030844
22.05.90 DE 4016743

(43) Veröffentlichungstag der Anmeldung:
27.11.91 Patentblatt 91/48

(84) Benannte Vertragsstaaten:
DE ES FR GB IT SE

(71) Anmelder: LACO S.A.
121, Avenue de la Faiencerie
L-1511 Luxembourg(LU)

(72) Erfinder: Jürgens, Wolfram
Cressogno, Via Statale
I-22010 Valsolda(IT)
Erfinder: Wagner, Walter
Theodor-Heuss Weg 34
W-3352 Einbeck(DE)

(74) Vertreter: Goddar, Heinz J., Dr. et al
FORRESTER & BOEHMERT
Widenmayerstrasse 4/I
W-8000 München 22(DE)

(54) **Hohlkörper zum Durchführen eines Fluids, Verfahren zu dessen Herstellung und Verwendung des Hohlkörpers.**

(57) Ein Hohlkörper zum Durchführen von Fluiden, insbesondere Schalldämpfer, Filter oder dergleichen, mit über seine Längserstreckung im wesentlichen ovalem oder kreisrundem Querschnitt, mit einem Außenrohr aus Metall (21), welches durch wendelförmig gewundene, an ihren aneinanderstoßenden Außenkanten miteinander durch Falzungen (11) verbundene Blechstreifen (10) gebildet ist, ist dadurch gekennzeichnet, daß das Außenrohr (21) mindestens zweiwandig ausgebildet und durch gemeinsames wendelförmiges Wickeln und Falzen (11) einer Anzahl der Außenrohrwände entsprechenden Anzahl von Endlosblechstreifen (10) identischer Breite hergestellt ist; es werden weiterhin Verfahren zur Herstellung derartiger Hohlkörper sowie deren Verwendungen beschrieben.

Fig.4

EP 0 458 049 A2

Die Erfindung betrifft einen Hohlkörper zum Durchführen von Fluiden, mit über seine Längserstreckung im wesentlichen ovalem oder kreisrundem Querschnitt, mit einem Außenrohr aus Metall, weiches durch wendelförmig gewundene, an ihren aneinanderstoßenden Außenkanten miteinander durch Falzungen verbundene Blechstreifen gebildet ist, sowie ein Verfahren zu dessen Herstellung und die Verwendung des Hohlkörpers.

Hohlkörper zum Durchführen eines Fluids, wie beispielsweise Schalldämpfer, Filter oder Rohrleitungen, werden bisher in der Regel aus einer Vielzahl von Einzelblechpreßteilen durch Schweißen und/oder Falzen hergestellt. Der Arbeitsaufwand ist erheblich, der Bedarf an Werkzeugen groß.

Aus der US-A-4,473,164 ist ein Hohlkörper der eingangs genannten Gattung bekannt, der aus einer Vielzahl von Seitenwandabschnitten zusammengesetzt ist, welche durch Falzungen, die im wesentlichen in Längsrichtung verlaufen, miteinander verbunden sind. Ein derartiger Hohlkörper kann auf ihn ausgeübte Kräfte bis zu einem gewissen Grade ausgleichen, so daß er als flüssigkeitsdichter Container eingesetzt werden kann. Jedoch scheidet dieser Kohlkörper für manche Anwendungen aus wirtschaftlichen Gründen aus. Auch können die Kohlkörper nicht in beliebigen Abmessungen hergestellt werden, wie es zum Transport von Kohlenwasserstoffen, wie beispielsweise Erdöl, über große Entfernungen in sogenannten "Pipelines" erforderlich wäre. Die notwendige Montage der vielen Einzelteile vor Ort würde einen Aufwand bedingen, der in keiner Relation zum erzielten Nutzen steht.

Der kostengünstige und zuverlässige Transport von z.B. Erdölen, Erdölderivaten oder Erdgas über teilweise große Entfernungen ist von erheblicher wirtschaftlicher Bedeutung. Bislang ist es üblich, hierfür erforderliche Pipelines oder Rohrleitungen dadurch herzustellen, daß teilweise aus teurem Spezialstahl bestehende, vorzugsweise ungeschweißte Metallrohre stückweise aneinandergesetzt, vorzugsweise verschweißt, werden, um auf diese Weise eine Rohrleitung der gewünschten Länge, die typischerweise über mehrere hundert Kilometer gehen kann, zu schaffen. Dazu könnte grundsätzlich auch ein aus der US-A-4,473,164 bekannter Hohlkörper verwendet werden. Es ist weiterhin bereits bekannt, insbesondere auf hoher See die einzelnen Rohrsegmente, die dann aus besonders elastischem Stahl hergestellt sein müssen, zu einer Endlosrohrleitung zu verschweißen und diese auf eine Tragspule großen Durchmessers aufzuwickeln, die dann z.B. an Bord eines Schiffes stationiert werden kann, wobei anschließend die Verlegung der Rohrleitung an Ort und Stelle erfolgt, jedoch ist hierfür nicht nur ein besonders teurer Spezialstahl erforderlich, sondern das Verfahren ist auch auf verhältismäßig geringe Rohrdurchmesser begrenzt, weil ansonsten die für das Aufwickeln notwendige Biegefähigkeit des Rohrstranges nicht mehr gewährleistet ist.

Der Erfindung liegt die Aufgabe zugrunde, einen Hohlkörper zum Durchführen von Fluiden mit nahezu beliebigem Durchmesser zu schaffen, der einfach und damit kostengünstig herstellbar ist, der über gute Gebrauchseigenschaften verfügt und der gegebenenfalls mit erheblicher Geschwindigkeit verlegt werden kann.

Diese Aufgabe wird von einem Hohlkörper der eingangs genannten Gattung mit den Merkmalen des Kennzeichens von Patentanspruch 1 gelöst. Vorteilhafte Ausgestaltungen sind Gegenstand der auf ihn rückbezogenen Unteransprüche. Ein Verfahren zum Herstellen eines derartigen Hohlkörpers ist Gegenstand der Patentansprüche 21 und 22. Erfindungsgemäße Verwendungen sind in den Patentansprüchen 23 bis 26 genannt.

Bei dem Kohlkörper gemäß der vorliegenden Erfindung ist das Außenrohr mindestens zweiwandig ausgebildet und durch gemeinsames wendelförmiges Wickeln und Falzen einer der Anzahl der Außenrohrwände entsprechenden Anzahl von Endlosblechstreifen identischer Breite hergestellt. Im Vergleich zu längsgefalzten Hohlkörpern, die auch mehrwandig ausgebildet sind, tritt bei gleicher Druck- bzw. Querfestigkeit eine Materialersparnis von ca. 35 % auf. Wenn der Hohlkörper als Schalldämpfer verwendet wird, wobei dann das Außenrohr stirnseitig durch Deckbleche im wesentlichen gasdicht abgeschlossen wird, ist nicht nur aufgrund der mehrwandigen Ausbildung ein geringerer Körperschall zu beobachten, die gewünschte Dämpfung kann auch wiederum gegenüber bekannten Schalldämpfern mit einer Materialersparnis in der Größenordnung von 35 % realisiert werden.

Eine Ausführungsform der Erfindung sieht vor, daß bei dem mehrwandig ausgebildeten Außenrohr mindestens das innere Einzelrohr mit einen Fluiddurchtritt ermöglichenden Durchbrechungen versehen ist.

Dabei kann auch vorgesehen sein, daß zumindest ein Teil der Durchbrechungen durch gestanzte Löcher gebildet ist.

Die Erfindung schlägt gegebenenfalls auch vor, daß zumindest ein Teil der Durchbrechungen durch Schlitzungen und/oder Ausbuchtungen des Rohrbleches gebildet ist.

Ferner kann nach der Erfindung vorgesehen sein, daß die Ausbuchtungen halbkegelförmig sind, wobei die Grundfläche der Hohlkegel die Durchbrechungen bildet.

Eine weitere Ausführungsform der Erfindung ist dadurch gekennzeichnet, daß zumindest das innere Einzelrohr aus dünnwandigem Edelstahlblech besteht.

Nach der Erfindung kann auch vorgesehen sein, daß mindestens in dem Ringspalt zwischen dem inneren Einzelrohr und dem daran nach außen anschließenden Rohr, gegebenenfalls dem äußeren Rohr des Außenrohres, eine absorbierende, dämpfende und/oder dämmende Zwischenlage, wie eine Mineralfaserschicht, Kunststoff, Blei oder dergleichen, angeordnet ist.

Die Erfindung schlägt gegebenenfalls auch vor, daß der sich an der Falznaht innen ausbildende Zwickel durch eine dichtende und/oder schwingungsdämpfende Einlage ausgefüllt ist.

Auch kann erfindungsgemäß vorgesehen sein, daß die Einlage durch einen beim Falzen entsprechend geformten Metalldraht gebildet ist.

Eine weitere Ausführungsform der Erfindung ist dadurch gekennzeichnet, daß der/die Blechstreifen mit Versteifungsrippen versehen ist/sind.

Nach der Erfindung kann ferner vorgesehen sein, daß bei Ausbildung als Schalldämpfer innerhalb des Außenrohres im wesentlichen senkrecht zu dessen Längsachse mit gegenseitigem Abstand sowie mit Abstand von den Deckblechen zwei mit einer Vielzahl von Löchern versehene Zwischenböden aus Metallblech oder dergleichen angeordnet sind; daß ein Zuführrohr das dem Zuführende des Schalldämpfers nächstliegende Deckblech und den diesem nächstliegenden Zwischenboden durchsetzt und in eine Zuführrohröffnung des anderen Zwischenbodens mündet; und daß ein Abführrohr das andere Deckblech und den diesem nächstliegenden Zwischenboden durchsetzt und in eine Abführrohröffnung des zuführseitigen Zwischenbodens mündet.

Dabei ist eine besondere Ausführungsform dadurch gekennzeichnet, daß das Zuführrohr in dem Bereich zwischen den beiden Zwischenböden mit Gasdurchtrittsöffnungen versehen ist.

Eine weitere Ausführungsform der Erfindung sieht vor, daß das Zuführrohr, das Abführrohr, mindestens einer der Zwischenböden und/oder mindestens eines der Deckbleche aus Edelstahlblech besteht/bestehen.

Nach der Erfindung wird gegebenenfalls auch vorgeschlagen, daß das Zuführrohr und/oder das Abführrohr innerhalb des Schalldämpfers im wesentlichen gerade verläuft/verlaufen.

Eine weitere Ausführungsform der Erfindung sieht vor, daß die im wesentlichen gasdichte Verbindung zwischen dem Außenrohr, den Deckblechen, den Zwischenböden und/oder dem Zuführ- und/oder Abführrohr ohne Schweißnaht oder dergleichen durch Falzung erzeugt ist.

Vorteilhaft ist es nach der Erfindung gegebenenfalls auch, daß die durch das zuführseitige Abdeckblech und den zuführseitigen Zwischenboden, die beiden Zwischenböden und den abführseitigen Zwischenboden und das abführseitige Deckblech gebildeten drei Kammern über den an das innere Einzelrohr nach außen anschließenden Ringspalt im Nebenschluß kommunizieren.

Es kann das Außenrohr aus wenigstens zwei Einzelrohren bestehen, die in jeweils einem vorbestimmten Abstand ineinanderliegend angeordnet sind. Damit werden verschiedene gegeneinander fluiddichte Kammern gebildet, in denen beispielsweise bei der Verwendung als Rohrleitung mehrere Fluide, die sich untereinander nicht vermischen dürfen, transportiert werden können.

Bevorzugt ist dabei, daß die Einzelrohre im wesentlichen konzentrisch zueinander angeordnet sind.

Neben dem bereits genannten ovalen oder kreisförmigen Querschnitt kann der Hohlkörper auch einen polygonalen Querschnitt, vorzugsweise einen dreieckigen, quadratischen oder sechseckigen Querschnitt aufweisen.

Dabei sollten die Eckradien aus herstellungstechnischen Gründen mindestens 40 mm betragen.

Das erfindungsgemäße Verfahren ist gekennzeichnet durch gemeinsames spiralförmiges bzw. wendelförmiges Wickeln und Falzen von wenigstens zwei Blechstreifen identischer Breite zu Langrohren mit unterschiedlichen Durchmessern und einer ein Vielfaches des Länge des herzustellenden Hohlkörpers betragenden Länge sowie Schneiden der Langrohre in regelmäßigen Abständen auf die Länge des herzustellenden Hohlkörpers.

Wenn das Herstellen eines erfindungsgemäßen Hohlkörpers vor Ort erfolgen soll, ist es bevorzugt, daß das Wickeln und Falzen des/der Blechstreifen(s) auf einem sich entsprechend der Herstellungsgeschwindigkeit des hergestellten Hohlkörpers vorwärtsbewegenden Verlegefahrzeug erfolgt.

Erfindungsgemäß wird der Hohlkörper nicht nur als Schalldämpfer, Filter oder dergleichen, sondern auch als Rohrleitung - oder als Bestandteil einer solchen - zum Transport von natürlichen oder synthetischen Kohlenwasserstoffen oder Mischungen derselben in gasförmiger oder flüssiger Form, wie Erdgas, Erdöl, Erdölderivaten oder dergleichen, verwendet, weiterhin zum Transportieren einer Vielzahl nicht zu vermischender Fluide, wobei wenigstens eine der Anzahl der Fluide entsprechende Anzahl von Innenrohren und/oder Außenrohren vorzugsweise konzentrisch ineinanderliegend angeordnet ist. Ein Hohlkörper, der insbesondere nach Anspruch 7 gestaltet ist, kann als Strahlenschutzfaß oder chemikalienresistentes Faß verwendet werden.

Eine weitere erfindungsgemäße Verwendung umfaßt das gleichzeitige Mitführen eines Starkstromkabels, wobei allerdings eine mehrwandige Ausbildung des Außenrohres nicht erforderlich ist, es vielmehr ausreicht, dieses einwandig vorzusehen.

Weitere Merkmale und Vorteile der Erfindung ergeben sich aus den Ansprüchen und aus der nachstehenden Beschreibung, in der Ausführungsbeispiele anhand der schematischen Zeichnung im einzelnen erläutert sind. Dabei zeigt:

Fig. 1    einen Hohlkörper nach der Erfindung in der Seitenansicht;

Fig. 2    einen Schnitt durch eine Falznaht nach dem Stand der Technik, deren Zwickel durch eine eingeformte Metalldrahteinlage ausgefüllt ist;

Fig. 3    eine Falznaht eines mit doppelwandigem Außenrohr ausgebildeten Hohlkörpers nach der Erfindung;

Fig. 4    einen Schnitt durch einen mit doppelwandigem Außenrohr ausgebildeten Hohlkörper nach der Erfindung mit dämpfender/dämmender Zwischenlage zwischen den beiden Wandungen des Außenrohres;

Fig. 5    in der Seitenansicht einen Abschnitt eines mit Durchbrechungen versehenen Einzelrohres eines Außenrohres des Hohlkörpers nach der Erfindung;

Fig. 6    in Fig. 5 entsprechender Darstellung ein anderes Ausführungsbeispiel eines mit Durchbrechungen versehenen Einzelrohres;

Fig. 7    eine Versteifungsrippen eines bei dem Hohlkörper nach der Erfindung verwendbaren Einzelrohres verdeutlichende Schnittdarstellung;

Fig. 8    ein Ausführungsbeispiel eines Schalldämpfers nach der Erfindung im axialen Längsschnitt;

Fig. 9    eine Draufsicht auf das zuführseitige Stirnende des Schalldämpfers von Fig. 8;

Fig. 10   einen Schnitt entlang der Linie X - X von Fig. 8;

Fig. 11   eine Schnittdarstellung eines erfindungsgemäßen Hohlkörpers mit zwei im wesentlichen konzentrisch liegenden Einzelrohren als Außenrohr;

Fig. 12   . einen Hohlkörper aus zwei konzentrisch liegenden Rohren, die erfindungsgemäß aufgebaut sind; und

Fig. 13   einen Hohlkörper gemäß der vorliegenden Erfindung mit hexagonalem Querschnitt.

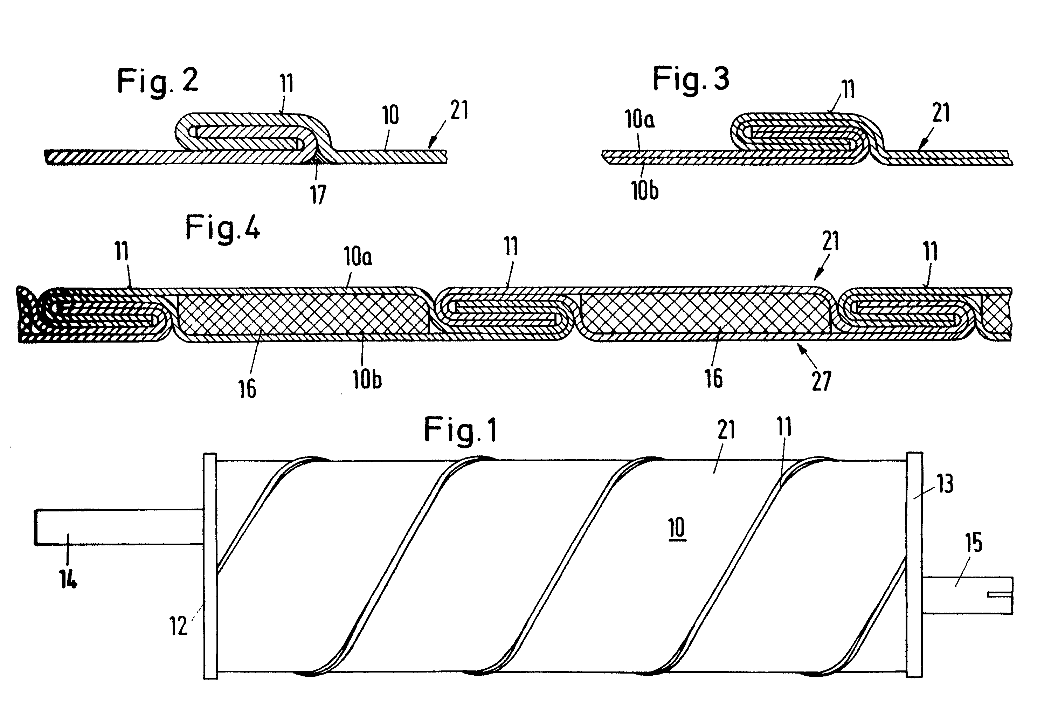

Wie Fig. 1 erkennen läßt, weist der Hohlkörper nach der Erfindung ein Außenrohr 21 auf, welches aus einem wendelförmig gewickelten Blechstreifen hergestellt ist, bei dem die aneinanderstoßenden Außenkanten der Blechstreifen in einer Falznaht 11 miteinander verfalzt sind. Der zylindrische Hohlkörper, der natürlich nicht notwendigerweise kreiszylindrisch ausgebildet sein muß, ist an seinen Stirnenden in bekannter Weise durch ein zuführseitiges Deckblech 12 und ein abführseitiges Deckblech 13 abgeschlossen, wobei in das zuführseitige Deckblech 12 bei dem in Fig. 1 als Schalldämpfer dienenen Hohlkörper ein Zuführrohr 14 und in das abführseitige Deckblech 13 ein Abführrohr 15 eingesetzt sind. Die durch den Hohlkörper zu führenden Gase, z.B. Abgase eines Kraftfahrzeuges, durchsetzen den Innenraum des Hohlkörpers von Fig. 1 also vom Zuführrohr 14 her in Richtung auf das Abführrohr 15.

Die Schnittdarstellung von Fig. 2 zeigt Einzelheiten der Falznaht 11 nach dem Stand der Technik, in der die aneinanderstoßenden Außenränder der Blechstreifen 10 dicht miteinander verbunden sind. In den sich im Bereich der Biegung der Blechstreifen 10 bildenden Zwickel ist eine Einlage 17 eingelegt, die den Zwickel ausfüllt und mit der Innenseite der Wandung des Blechstreifens 10 fluchtet. Diese Einlage kann aus einem Kunststoffstreifen bestehen, vorzugsweise wird jedoch ein Metalldraht aus einem relativ weichen Material gewählt, der sich bei der Verfalzung der Form des Zwickels vollständig anpaßt.

Die Schnittdarstellung von Fig. 3 entspricht der von Fig. 2 mit der Abweichung, daß das Außenrohr 21 erfindungsgemäß zwei Wandungen 10a, 10b aufweist, die aus entsprechenden aufeinandergelegten bzw. gemeinsam in die Falzvorrichtung einlaufenden Blechstreifen gebildet sind.

Fig. 4 zeigt eine Fig. 3 entsprechende Darstellung, wobei der Ringspalt zwischen den beiden Wandungen 10a, 10b im Bereich außerhalb der Falznaht 11 durch eine wärme- und/oder schallisolierende und/oder schall- bzw. wärmedämmende Zwischenlage 16 gefüllt ist. Auch bei den Ausführungsbeispielen von Fig. 3 und 4 kann der Zwickel in der Falznaht 11 natürlich durch eine Einlage 17 geschlossen werden, wie dies in Fig. 2 dargestellt ist.

Bei Verwendung von Edelstahl für das durch die Wandung 10b von Fig. 3 und Fig. 4 gebildete innere Einzelrohr 27 (Fig. 2; Fig. 8; Fig. 6; Fig. 10) wird eine besonders hohe Korrosionsbeständigkeit erzielt. Diese Innenwandung 10b aus Edelstahl kann aus einem sehr dünnen Blech hergestellt sein, wobei die mechanische Belastung durch die Außenwandung 10a aufgenommen wird. Statt einer doppelwandigen Ausbildung das Außenrohres 21 ist natürlich auch eine Ausbildung aus noch mehr Einzelrohren möglich. Dabei können für die einzelnen Wandungen bzw. Einzelrohre unterschiedliche Materialien verwendet werden.

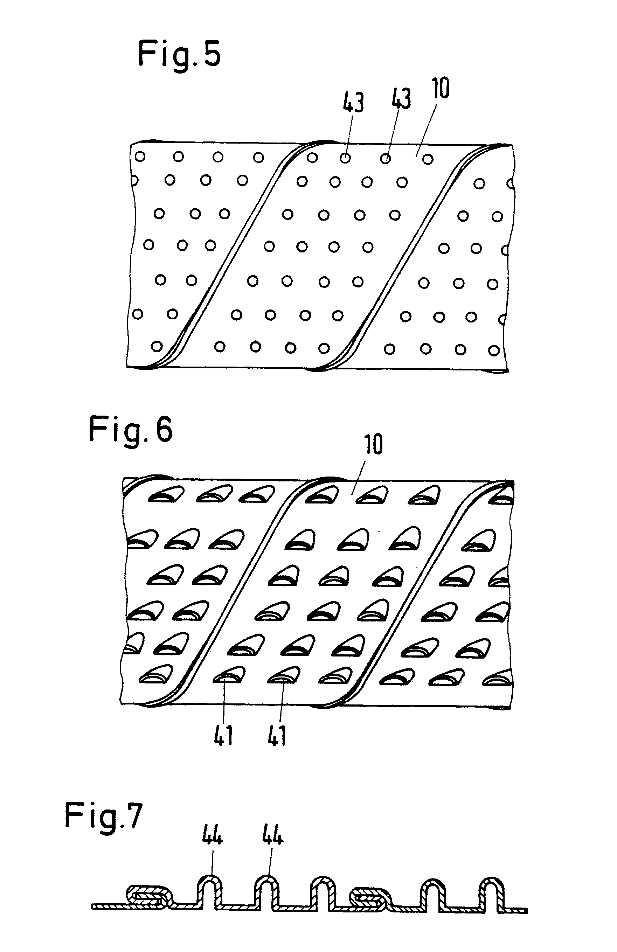

In den Fig. 6 und 7 sind Blechstreifen 10 dargestellt, welche zeigen, daß die dort abschnittsweise gezeigten Einzelrohre mit Unterbrechungen 41, 43 versehen sein können. Dabei sind die Durchbrechungen in Fig. 6 durch einfache, in den Blechstreifen 10 eingestanzte Löcher gebildet. Bei dem in Fig. 7 dargestellten Ausführungsbeispiel ist der Blechstreifen 10 dagegen mit einer Vielzahl von Schlitzungen und sich an die Schlitzungen anschließenden halbkegelmantelförmigen Ausbuchtungen versehen, wobei die etwa halbkreisförmigen Grundflächen die Durchbrechungen bilden.

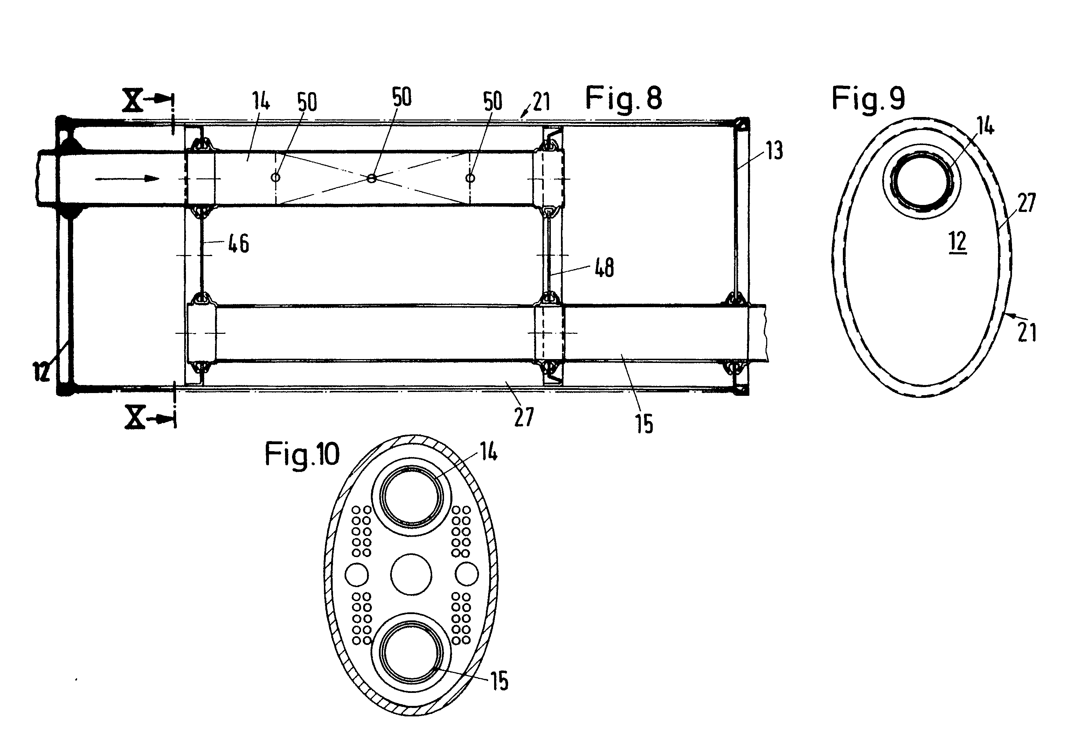

In Fig. 8 ist gezeigt, daß die Blechstreifen mit Versteifungsrippen 44 versehen sein können.

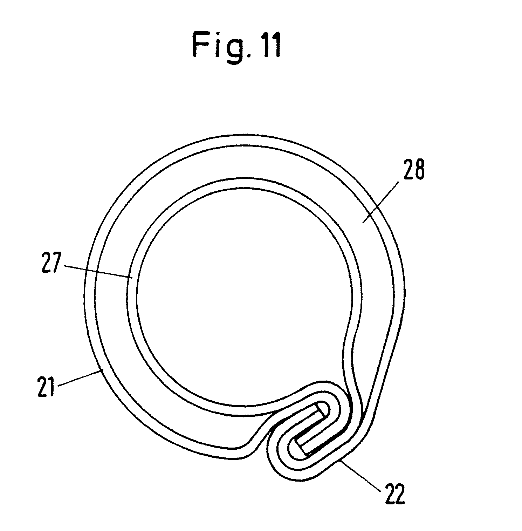

Beim Ausführungsbeispiel des Schalldämpfers von Fig. 8 ist das Außenrohr 21, innerhalb dessen mit Radialabstand unter Bildung eines mit einer dämmenden oder dämpfenden Zwischenlage gefüllten Ringspaltes das Innenrohr 27 angeordnet ist, wiederum stirnseitig mit dem zuführseitigen Deckblech 12 und dem abführseitigen Deckblech 13 versehen. Innerhalb des Außenrohres 21 sind im wesentlichen quer zu dessen Längsachse verlaufend mit gegenseitigem Abstand sowie mit Abstand von dem Deckblech 12 bzw. dem Deckblech 13 zwei Zwischenböden 46, 48 aus Edelstahl angeordnet. Das Zuführrohr 14 durchsetzt das Deckblech 12 und den Zwischenboden 46 und mündet offen in einer entsprechenden Zuführrohröffnung des Zwischenbodens 48. Im Bereich zwischen dem Zwischenboden 46 und dem Zwischenboden 48 ist das Zuführrohr 14 mit Gasdurchtrittsöffnungen 50 versehen. Das Abführrohr 15 durchsetzt das Deckblech 13 und den Zwischenboden 48 und mündet offen in einer Zuführrohröffnung des Zwischenbodens 46. Die Kammern, welche durch das Deckblech 12 und den Zwischenboden 46 einerseits, die beiden Zwischenböden 46, 48 andererseits sowie den Zwischenboden 48 und das Deckblech 13 gebildet sind, stehen über den Ringspalt zwischen dem äußeren Rohr des Außenrohres 21 und dem inneren Einzelrohr 27 desselben in Nebenschlußverbindung. Die Zwischenböden 46, 48 sind in der aus Fig. 10 ersichtlichen Weise - Fig. 9 läßt die Anordnung des Zuführrohres 14 innerhalb des Deckbleches 12 erkennen - mit Perforationen versehen. Insgesamt wird durch die Anordnung der Perforationen in den Zwischenböden 46, 48 in Verbindung mit den entsprechenden Durchbrechungen des inneren Einzelrohres 27 und dem Nebenschluß über den Ringspalt außerhalb des inneren Einzelrohres 27, kombiniert mit den Gasdurchtrittsöffnungen 50 des Zuführrohres 14 im Abschnitt zwischen den beiden Zwischenböden 46 und 48 eine hervorragende Schalldämpfung erzielt. Der Schalldämpfer läßt sich ohne Verwendung von Schweißverbindungen kostengünstig herstellen, wobei die vorzugsweise Ausbildung aller mit den Abgasen in Kontakt kommenden Schalldämpferflächen aus Edelstahl eine hohe Korrosionsbeständigkeit bewirkt, die durch das Fehlen jedweder Schweißverbindungen noch weiter gefördert wird.

Fig. 11 zeigt eine Ausführungsform des erfindungsgemäßen Hohlkörpers, bei dem das innere Einzelrohr 27 in einem bestimmten, relativ geringen Abstand vom Außenrohr 21 angeordnet ist. Beide Rohre werden an der Falzstelle 22 zusammengefaßt. Durch diese Anordnung wird zwischen dem inneren Einzelrohr 27 und dem Außenrohr 21 ein Hohlraum 28 geschaffen, durch den beispielsweise Kühlflüssigkeit geführt werden kann, der aber auch, falls dies gewünscht ist, zum Aufnehmen von Dämmaterial geeignet ist. Mit welchem Stoff der Hohlraum 28 gefüllt wird, hängt von dem Verwendungszweck des Hohlkörpers ab. Soll er als Strahlenschutzfaß eingesetzt werden, so ist es zweckmäßig, in den Hohlraum 28 Blei einzubringen. Bei Verwendung als chemikalienresistentes Faß oder als chemikalienresistente Rohrleitung kann mit einem geeigneten Kunststoff ausgeschäumt werden.

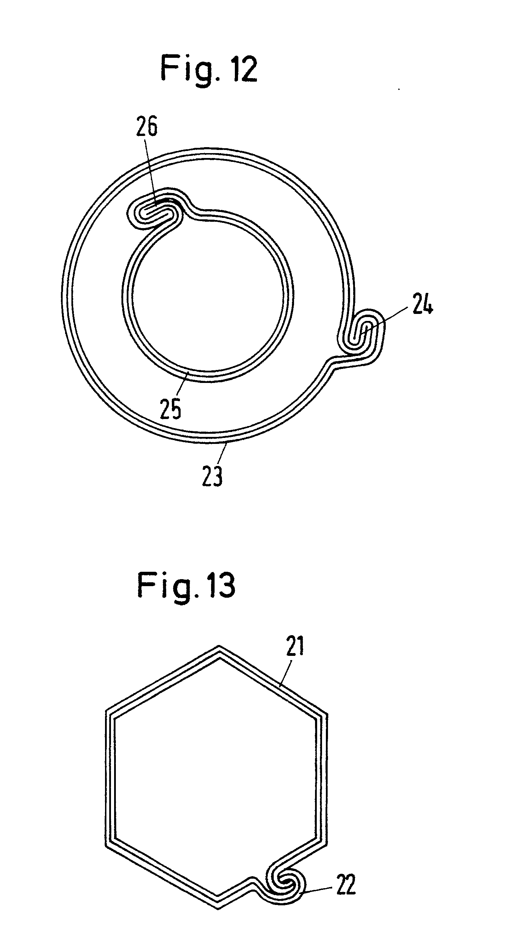

Eine Modifikation der Ausführungsform aus Fig. 11 zeigt Fig. 12. Falls eine absolute Fluidabdichtung erforderlich ist, sollten zwei ineinanderliegende doppelwandige Rohre 23, 25 verwendet werden, die jeweils erfindungsgemäß mit der wendelförmigen Falzung 24, 26 verschlossen sind. Ein derartiges gestalteter Hohlkörper ist besonders geeignet, wenn verschiedene Fluide geführt werden, die sich nicht vermischen dürfen. Dies kann insbesondere dann der Fall sein, wenn gleichzeitig ein Gas und eine Flüssigkeit zu transportieren sind.

Anstelle eines kreisförmigen oder ovalen Querschnittes kann ein Hohlkörper gemäß der vorliegenden Erfindung auch einen polygonalen Querschnitt aufweisen, wie es am Beispiel eines hexagonalen Querschnitts in Fig. 13 gezeigt ist. Solche "parkettierbaren" Querschnitte sind besonders geeignet, wenn die Hohlkörper dicht gepackt werden sollen. Falls dieses gewünscht ist, sollte die Falzung 22 möglichst weitgehend in den Innenbereich des Hohlkörpers eingepaßt werden, so daß sich eine nahezu ideale Form des Außenrohres 21 ergibt.

Der erfindungsgemäße Hohlkörper kann auch als Rohrleitung eingesetzt werden, wobei diese Rohrleitung am Verwendungsort aufgebaut werden kann. Dadurch, daß erfindungsgemäß der Hohlkörper aus Blechstreifen gewickelt wird, ist es möglich, eine entsprechende Vorrichtung zur Herstellung des entsprechenden Hohlkörpers auf einem Fahrzeug, wie beispielsweise einem schweren Lastkraftwagen, zu montieren, der dann mit der entsprechenden Vorschubgeschwindigkeit, beispielsweise etwa zehn Metern pro Minute, voranfährt und hinter sich das auf dem Lastwagen jeweils an Ort und Stelle gewickelte Rohr ablegt. Die Transportprobleme, welche ansonsten bei Pipelinesegmenten in Rohrform auftreten, werden vollständig überwunden, da lediglich flache, ebene Blechstreifen, die gegebenenfalls auch als Vorratsspule gewickelt werden können, an den Verwendungsort transportiert werden müssen.

Die Rohrleitung nach der Erfindung läßt sich neben den bereits beschriebenen Anwendungszwecken, also Transport von Kohlenwasserstoffen, wie beispielsweise Erdöl oder dergleichen, beispielsweise auch dazu verwenden, chemische Substanzen oder auch Suspensionen von Feststoffen in Flüssigkeiten zu transportieren. Handelt es sich darum, Flüssigkeiten zu verwenden, die während des Transportes gekühlt werden müssen, wie dies beispielsweise beim Erdgastransport mittels bislang bereits verwendeten doppelwandiger Pipeline-Rohre der Fall ist, bei denen sich in dem Hohlmantel eine Kühlflüssigkeit befindet, so läßt sich erfindungsgemäß besonders günstig ein derartiges Hohlmantelrohr realisieren, indem nämlich das Außenrohr aus zwei mit verhältnismäßig geringem Abstand gewickelten Einzelrohren besteht. Überhaupt ermöglich es die Erfindung ohne weiteres, zwei oder auch mehr unterschiedliche Medien durch einen einzigen zylindrischen Hohlkörper der erfindungsgemäßen Art zu schicken, in dessen Innerem jeweils, vorzugsweise konzentrisch, verschiedene weitere Hohlkörper angeordnet sind, wobei sich die einzelnen Hohlkörper oder Rohrleitungen erfindungsgemäß gleichsam von innen nach außen konzentrisch nacheinander in der beschriebenen Weise herstellen lassen. Allgemein ist hierdurch, wie bereits beschrieben, auch der Transport von Stoffen möglich, die einer Kühlung oder einer Isolation beim Transport bedürfen, und zwar sowohl im gasförmigen als auch im flüssigen Zustand, ferner auch in unterkühltem Zustand, wobei ein integriertes Überwachungssystem (Sensortechnik) in der äußeren Hülle des äußersten Hohlkörpers angebracht werden kann.

Da der Hohlkörper gemäß der Erfindung sich durch eine extreme Spannungsaufnahme auszeichnet, kann er auch für die Starkstromkabelverlegung verwendet werden. Hier ist es vorteilhaft, die Kabel in einem einwandigen Rohr zu führen, da dieses aufgrund der wendelförmigen Anordnung der Falzung die auftretenden Spannungen optimal aufnehmen kann, so daß eine Zerstörung des Kabels nicht zu erwarten ist.

Die in der vorstehenden Beschreibung, in der Zeichnung sowie in den Patentansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Hohlkörper zum Durchführen von Fluiden, insbesondere Schalldämpfer, Filter, Rohrleitungen, Behälter oder dergleichen, mit über seine Längserstreckung im wesentlichen ovalem oder kreisrundem Querschnitt, mit einem Außenrohr aus Metall, welches durch wendelförmig gewundene, an ihren aneinanderstoßenden Außenkanten miteinander durch Falzungen verbundene Blechstreifen gebildet ist, dadurch gekennzeichnet, daß das Außenrohr (21) mindestens zweiwandig ausgebildet und durch gemeinsames wendelförmiges Wickeln und Falzen einer der Anzahl der Außenrohrwände entsprechenden Anzahl von Endlosblechstreifen identischer Breite hergestellt ist.

2. Hohlkörper nach Anspruch 1, dadurch gekennzeichnet, daß bei mehrwandig ausgebildetem Außenrohr (21) mindestens das innere Einzelrohr (27) mit einen Fluiddurchtritt ermöglichenden Durchbrechungen (41, 43) versehen ist.

3. Hohlkörper nach Anspruch 2, dadurch gekennzeichnet, daß zumindest ein Teil der Durchbrechungen durch gestanzte Löcher (43) gebildet ist.

4. Hohlkörper nach Anspruch 2 oder 3, dadurch gekennzeichnet, daß zumindest ein Teil der Durchbrechungen durch Schlitzungen und/oder Ausbuchtungen (41, 44) des Rohrbleches gebildet ist.

5. Hohlkörper nach Anspruch 4, dadurch gekennzeichnet, daß die Ausbuchtungen halbkegelförmig sind, wobei die Grundfläche (41) der Hohlkegel die Durchbrechungen bildet.

6. Hohlkörper nach einem der Ansprüche 2 bis 5, dadurch gekennzeichnet, daß zumindest das innere Einzelrohr (27) aus dünnwandigem Edelstahlblech besteht.

7. Hohlkörper nach einem der Ansprüche 2 bis 6, dadurch gekennzeichnet, daß mindestens in dem Ringspalt zwischen dem inneren Einzelrohr (27) und dem daran nach außen anschließenden Rohr, gegebenenfalls dem äußeren Rohr des Außenrohres (21), eine absorbierende, dämpfende und/oder dämmende Zwischenlage (16), wie eine Mineralfaserschicht, Kunststoff, Blei oder dergleichen, angeordnet ist.

8. Hohlkörper nach einem der vorangehenden Ansprüche, dadurch gekennzeichnet, daß der sich an der Falznaht (11) innen ausbildende Zwickel durch eine dichtende und/oder schwingungsdämpfende Einlage (17) ausgefüllt ist.

9. Hohlkörper nach Anspruch 8, dadurch gekennzeichnet, daß die Einlage (17) durch einen bei dem Falzen entsprechend geformten Metalldraht gebildet ist.

10. Hohlkörper nach einem der vorangehenden Ansprüche, dadurch gekennzeichnet, daß der/die Blechstreifen (10) mit Versteifungsrippen (44) versehen ist/sind.

11. Hohlkörper nach einem der vorangehenden Ansprüche, dadurch gekennzeichnet, daß bei Ausbildung als Schalldämpfer innerhalb des Außenrohres (21) im wesentlichen senkrecht zu dessen Längsachse mit gegenseitigem Abstand sowie mit Abstand von stirnseitig ausgebildeten Deckblechen (12, 13) zwei mit einer Vielzahl von Löchern versehene Zwischenböden (46, 48) aus Metallblech oder dergleichen angeordnet sind; daß ein Zuführrohr (14) das dem Zuführende des Schalldämpfers nächstliegende Deckblech (12) und den diesem nächstliegenden Zwischenboden (46) durchsetzt und in eine Zuführrohröffnung des anderen Zwischenbodens (48) mündet; und daß ein Abführrohr (15) das andere Deckblech (13) und den diesem nächstliegenden Zwischenboden (48) durchsetzt und in eine Abführrohröffnung des zuführseitigen Zwischenbodens (46) mündet.

12. Hohlkörper nach Anspruch 11, dadurch gekennzeichnet, daß das Zuführrohr (14) in dem Bereich zwischen den beiden Zwischenböden (46, 48) mit Gasdurchtrittsöffnungen (50) versehen ist.

13. Hohlkörper nach Anspruch 11 oder 12, dadurch gekennzeichnet, daß das Zuführrohr (14), das Abführrohr (15), mindestens einer der Zwischenböden (46, 48) und/oder mindestens eines der Deckbleche (12, 13) aus Edelstahlblech besteht/bestehen.

14. Hohlkörper nach einem der Ansprüche 11 bis 13, dadurch gekennzeichnet, daß das Zuführrohr (14) und/oder das Abführrohr (15) innerhalb des Schalldämpfers im wesentlichen gerade verläuft/verlaufen.

15. Hohlkörper nach einem der Ansprüche 11 bis 14, dadurch gekennzeichnet, daß die im wesentlichen gasdichte Verbindung zwischen dem Außenrohr (21), den Deckblechen (12, 13), den Zwischenböden (46, 48) und/oder dem Zuführ- (14) und/oder Abführrohr (15) ohne Schweißnaht oder dergleichen durch Falzung erzeugt ist.

16. Hohlkörper nach einem der Ansprüche 11 bis 15, dadurch gekennzeichnet, daß die durch das zuführseitige Abdeckblech (12) und den zuführseitigen Zwischenboden (46), die beiden Zwischenböden (46, 48) und den abführseitigen Zwischenboden (48) und das abführseitige Deckblech (13) gebildeten drei Kammern über den an das innere Einzelrohr (27) nach außen anschließenden Ringspalt im Nebenschluß kommunizieren.

17. Hohlkörper nach einem der vorangehenden Ansprüche, dadurch gekennzeichnet, daß das Außenrohr aus wenigstens zwei Einzelrohren (23, 25) besteht, die in jeweils einem vorbestimmten geringen Abstand ineinanderliegend angeordnet sind.

18. Hohlkörper nach Anspruch 17, dadurch gekennzeichnet, daß die Einzelrohre (23, 25) im wesentlichen konzentrisch zueinander angeordnet sind.

19. Kohlkörper nach einem der vorangehenden Ansprüche, dadurch gekennzeichnet, daß er über seine Längserstreckung einen polygonalen Querschnitt, vorzugsweise einen dreieckigen, quadratischen oder sechseckigen Querschnitt aufweist.

20. Hohlkörper nach Anspruch 19, dadurch gekennzeichnet, daß die Eckradien wenigstens 40 mm betragen.

21. Verfahren zum Herstellen des Hohlkörpers nach einem der vorangehenden Ansprüche, gekennzeichnet durch gemeinsames wendelförmiges Wickeln und Falzen von wenigstens zwei Blechstreifen identischer Breite zu Langrohren mit unterschiedlichen Durchmessern und einer ein Vielfaches der Länge des herzustellenden Hohlkörpers betragenden Länge sowie Schneiden der Langrohre in regelmäßigen Abständen auf die Länge des herzustellenden Kohlkörpers.

22. Verfahren nach Anspruch 21, dadurch gekennzeichnet, daß das Wickeln und Falzen des/der Blechstreifen(s) auf einem sich entsprechend der Herstellungsgeschwindigkeit des hergestellten Hohlkörpers vorwärtsbewegenden Verlegefahrzeug erfolgt.

23. Verwendung des Hohlkörpers zum Durchführen von Fluiden nach einem der vorangehenden Ansprüche als Rohrleitung -oder als Bestandteil einer solchen - zum Transport von natürlichen oder synthetischen Kohlenwasserstoffen oder Mischungen derselben in gasförmiger oder flüssiger Form, wie Erdgas, Erdöl, Erdölderivaten oder dergleichen.

24. Verwendung des Hohlkörpers nach einem der vorangehenden Ansprüche zum Transportieren einer Vielzahl nicht zu vermischender Fluide, wobei wenigstens eine der Anzahl der Fluide entsprechende Anzahl von inneren und/oder äußeren Einzelrohren vorzugsweise konzentrisch ineinanderliegend angeordnet ist.

25. Verwendung des Hohlkörpers nach einem der vorangehenden Ansprüche, insbesondere nach Anspruch 21, als Strahlenschutzfaß oder chemikalienresistentes Faß.

26. Verwendung des Hohlkörpers nach einem der vorangehenden Ansprüche, wobei gleichzeitig ein Starkstromkabel mitgeführt wird.

Fig.1

Fig.2

Fig.3

Fig.4

# Fig. 5

# Fig. 6

# Fig. 7

Fig. 8

Fig. 9

Fig. 10

EP 0 458 049 A2

# Fig. 11

## Fig. 12

## Fig. 13